Europäisches Patentamt

European Patent Office

Office européen des brevets

(11) Publication number: **0 231 381 B1**

# EUROPEAN PATENT SPECIFICATION

(45) Date of publication of patent specification: **11.08.93**  (51) Int. Cl.5: **B29C 39/10**

(21) Application number: **86903577.4**

(22) Date of filing: **30.05.86**

(86) International application number:
**PCT/JP86/00276**

(87) International publication number:
**WO 86/07001 (04.12.86 86/26)**

The file contains technical information submitted
after the application was filed and not included in
this specification

(54) STRUCTURAL MATERIAL AND PROCESS FOR ITS PRODUCTION.

(30) Priority: **31.05.85 JP 119120/85**
**02.11.85 JP 246542/85**

(43) Date of publication of application:
**12.08.87 Bulletin 87/33**

(45) Publication of the grant of the patent:
**11.08.93 Bulletin 93/32**

(84) Designated Contracting States:
**DE FR GB IT**

(56) References cited:
**EP-A- 0 114 971**     **DE-A- 1 803 647**
**JP-A- 5 514 205**     **JP-A-55 117 630**
**JP-A-55 117 630**     **US-A- 4 579 343**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **TOMINAGA, Ichiro**
**31-7, Aobadai Kita-ku Kobe-shi**
**Hyogo 651-12(JP)**
Inventor: **MATUKI, Taketo**
**8-27, Yumibacho Nishinomiya-shi**
**Hyogo 662(JP)**
Inventor: **YAMAGUCHI, Tetuo**
**3-4, Ishizaicho Nishinomiya-shi**
**Hyogo 662(JP)**
Inventor: **MATUSHITA, Hiroomi**
**2-3-12-104, Nankonaka Suminoeku**
**Osaka-shi, Osaka 559(JP)**
Inventor: **Niwa, Kunio**
**Sumitomo-gomu Kobu-ryo 1-1-23, Hinokuchi-cho**
**Nishinomiya-shi, Hyogo 663(JP)**

(74) Representative: **Geering, Keith Edwin et al**
**REDDIE & GROSE 16 Theobalds Road**
**London WC1X 8PL (GB)**

EP 0 231 381 B1

## Description

This invention relates to a structural material suited to be used in racket frames for tennis, squash, badminton or the like, poles for tent frames, pipes for structural material, buried earth pipes, blocks, fishing rods or the like, and a method of fabricating the same.

Fiber reinforced composite materials conventionally used as structural materials for building materials or sports articles include those prepared by adding long filament reinforcing materials to a thermoset resin used as the matrix.

These materials, however, involve the following problems in their forming properties, strength, heat resistance and fatigue characteristic, and superior fiber reinforced composite materials have been demanded.

In addition, the following two types are known as fiber reinforced plastics for racket frames for ball games.

(1) Continuous fiber/resin matrix type
(2) Short fiber of chopped fiber/resin matrix type

In type (1), epoxy, polyester or phenolic thermoset resin is used as resin matrix, and it is impregnated in continuous filament, and heated and pressurized, so that the resin is hardened and molded into a desired shape.

In type (2), the reinforced members are composed of fiber reinforced members of short discontinuous length randomly dispersed in the resin matrix, and this resin may be either thermoplastic or thermosetting. As the thermoset material, the one shown in (1) is used, and as the thermoplastic material, for example, nylon, polycarbonate, polyphenylene oxide, acetal and other so-called industrial thermoplastics are used. As the molding method, mainly injection molding is employed.

On the other hand, as the characteristics required in rackets, usually, toughness, rigidity and resilience are known. As for toughness, since the toughness of matrix resin of type (1) is inferior, expensive carbon fibers or other reinforced fibers are used usually by 60 to 70 wt.% in order to obtain a required toughness. Since this is an easy method of obtaining a required strength and desired shape, this method is employed in almost 100 percent in the existing tennis racket frames using reinforced plastics.

In the case of (2), usually, considering the moldability, in particular, fluidity at the time of injection, the molecular weight of matrix resin is kept low. The fiber content is about 30 wt.%, and the fiber length is mostly less than 1 mm (0.2 to 0.3 mm) after pelletizing and injection molding. Since the matrix resin is not high in molecular weight and the length of reinforced fibers is extremely short, improvement of mechanical strength in this composition is not expected. Therefore, if such racket strung with gut is kept in an automobile trunk, for example, and its internal temperature exceeds 80°C, it is highly possible that the frame may be deformed or broken during use.

To compensate for this defect, it is consequently necessary to increase the wall thickness of racket frames, but since the total weight increases, it is not so practical.

Recently, as sports are becoming popular pastimes, consideration of sports injuries is required. For example, according to a certain polling, about one third of tennis players claimed to have "experienced pain in the elbow." This is known as tennis elbow, and the player feels pain suddenly in the elbow of the racket holding side without any specific cause. In a racket inferior in vibration absorption property, it is said that the vibration of hitting a ball is transmitted to the elbow to damage the humerous epicondylus. In the continuous filament/resin matrix type (1) which is in the mainstream of the present racket frame materials, since the commonly used epoxy resin and polyester resin are inferior in impact absorption or toughness and high rigidity fibers such as carbon fiber are contained at 60 to 70 wt.% in order to improve flexural modulus, it is considered that the vibration characteristic is inferior.

Incidentally, as technical reports about industrial materials using nylon resins, for example, "Nylon RIM Development for Automotive Body Panels" (SAE Technical Paper Series 850157, 1985), and "Nylon 6 RIM" (American Chemical Society, 1985) are known, and also an article relating to terminal amine polyether RIM (SAE Technical Paper Series 850155, 1985), an article relating to the future of RIM in America (American Chemical Society, 1985), and an article relating to RIM monomer casting ("Plastics Technology," May 1985 issue) are available, but nothing is mentioned about long filament reinforced products in these papers. "RIM is an abbreviation for "reactive injection moulding".

The present invention is devised in the light of the above background, and provides a structural material which is lightweight, excels in strength and flexural modulus, and allows wide freedom in designing shape and material as compared with that of conventional materials.

DE-A-1803647 discloses making a nylon composite by laying filaments of carbon or graphite parallel to one another in a mould, and pouring an activated caprolactam monomer composition over them and polymerising the caprolactam to form the matrix of the composite. It does not disclose any properties or uses of the composite, and does not disclose any surface treatment of the filaments.

The present invention provides a reactive injection moulded polyamide resin structure reinforced by continuous fiber and/or long filament reinforcing material characterised in that said reinforcing material is surface treated with nylon soluble in alcohol or water or both water and alcohol. The structure may for example be a bar or a tennis racket frame.

It also provides a method of fabricating a continuous fiber- and/or long filament-reinforced polyamide resin structure by the monomer casting method comprising providing said reinforcing material in a mold, pouring molten $\omega$-lactam containing polymerization catalyst and initiator into said mold, and heating to obtain polyamide resin and form the structure, characterised in that said reinforcing material is preliminarily surface treated with nylon which is soluble in alcohol or water or both alcohol and water.

The monomers used in this invention, $\omega$-lactams, may include the following examples: $\alpha$-pyrrolidone, $\alpha$-piperidone, $\epsilon$-caprolactam, $\omega$-enantolactam, $\omega$-caprilolactam, $\omega$-peralgonolactam, $\omega$-decanolactam, $\omega$-undecanolactam, $\omega$-laurolactam, their c-alkyl substitute-$\omega$-lactam, and mixture of two or more kinds of $\omega$-lactams. However, what is advantageous industrially is e-caprocaltam or $\omega$-laurolactam. And $\omega$-lactams may contain, if necessary, modifying components (soft components).

A soft component possesses in its molecule a functional group reacting with an initiator used, and it is a component of low Tg, and usually polyether or liquid polybutadiene possessing such functional group is used.

A commercial material used in this invention may be, for, example, UX-21 which is a nylon RIM material manufactured by Ube Industries, Ltd. It is composed of component A made of alkali catalyst and caprolactam, and component B made of prepolymer containing soft component and caprolactam.

As the anionic polymerization catalyst used in this invention, sodium hydride (NaH) is preferable, but also other sodium, potassium, lithium hydride and known $\omega$-lactam polymerization catalysts may be used. The content is preferably in a range of 0.1 to 5.0 mol% of $\omega$-lactam.

As the polymerization initiator, N-acetyl-$\epsilon$-caprolactam can be used, but other applicable examples are triallylisocyanurate, N-substituted ethyelene imine derivative, 1,1'-carbonyl visazilidine, oxazoline derivative, 2-(N-phenylbenzimidoyl) acetoanilide, 2-N-morpholinocyclohexene-1.3-dicarboxysanilide, and known isocyanate, carbodimide and similar compounds. The content of the initiator is preferably in a range of 0.05 to 1.0 mol% of $\omega$-lactam. The methods of its addition include:

(A) A method of directly adding and mixing to $\omega$-lactam solution containing anionic polymerization catalyst;

(B) A method of mixing $\omega$-lactam solution containing anionic polymerization catalyst and another $\omega$-lactam solution containing polymerization initiator; and

(C) A method of adding together with anionic polymerization catalyst preliminarily to the solid or liquid $\omega$-lactam. Any method may be employed.

The polymerization temperature is generally preferably in a range of 120 to 200°C, but it is also possible, for special purposes, to polymerize under 120°C or over 200°C. As the continuous fiber which is a reinforcing material, depending on the applications, carbon fiber, aramide fiber, glass fiber, alumina fiber, silicon carbide fiber, steel wire, amorphous metal fiber and/or their hybrid may be used in the form of cloth, sleeve or roving.

The continuous fibers and/or long filaments are placed in the mold, for example when fabricating a pipe-shaped structural material, by winding a necessary amount around the core, or covering the core as sleeve. To obtain a block-shaped product, they may be preliminarily set in the mold.

In this invention, since the monomer casting method is employed, there is no limitation to the molecular weight in consideration of the molding processability, and a polyamide resin of high molecular weight is obtained, so that the strength, elasticity and thermal distortion temperature are high. So the thickness of the structural material may be reduced, and the weight may be light.

As a material of thermoplastic resin reinforced by long filaments, a so-called stampable sheet is known, and as its nylon version, a sheet composed of nylon resin and continuous glass fiber mat may be considered as an example, but when obtaining a molded product of desired shape by using such stampable sheet, the following problems exist. That is, when a stampable sheet is used as molding material, it is necessary to handle the heated and melted material sheet outside the mold, and at this time the temperature is as high as 200 to 350°C, and the molten material sheet is very soft and extremely hard to handle. Besides, heating equipment using far infrared rays is required, and the facility cost is high. Furthermore, the press pressure at the time of molding is very high, about 100 to 300 kg/cm$^2$, and the mold and other facilities are expensive. Still more, the reinforcing fibers form relief patterns on the molded product surface, or air bubbles mixed in the heating process of material cannot be forced out completely when molding and are left over on the surface, and the surface finished state is not favorable; or it is difficult to form thin or complicated shapes.

Therefore, the method of this invention by monomer casting process seems far better.

In this invention, moreover, since a tough polyamide resin is used instead of brittle thermoset resin, the content of reinforcing fiber may be small, and in particular by using continuous fiber and/or long filament it is possible to reinforce further and decrease the content of reinforcing fibers, so that economy and light weight may be achieved together. In addition, the excellent vibration attenuating characteristic of the polyamide resin used in the matrix resin becomes more notable because the content of reinforcing fibers is small, so that a racket frame, shaft for ball games, and other structural materials light in weight and excellent in durability and appearance may be obtained.

The structural material of this invention is excellent in lightness of weight, strength, flexural modulus, vibration attenuation characteristic and other properties, because tough polyamide resin, instead of brittle thermoset resin, is used as matrix resin, and it is further reinforced by continuous fiber and/or long filament reinforcing material.

This structural material is easily formed in a desired shape by the fabricating method according to the invention, in which the fiber reinforcing material is preliminarily placed in a desired shape, and the matrix resin is added to it by monomer casting.

In the accompanying drawings:

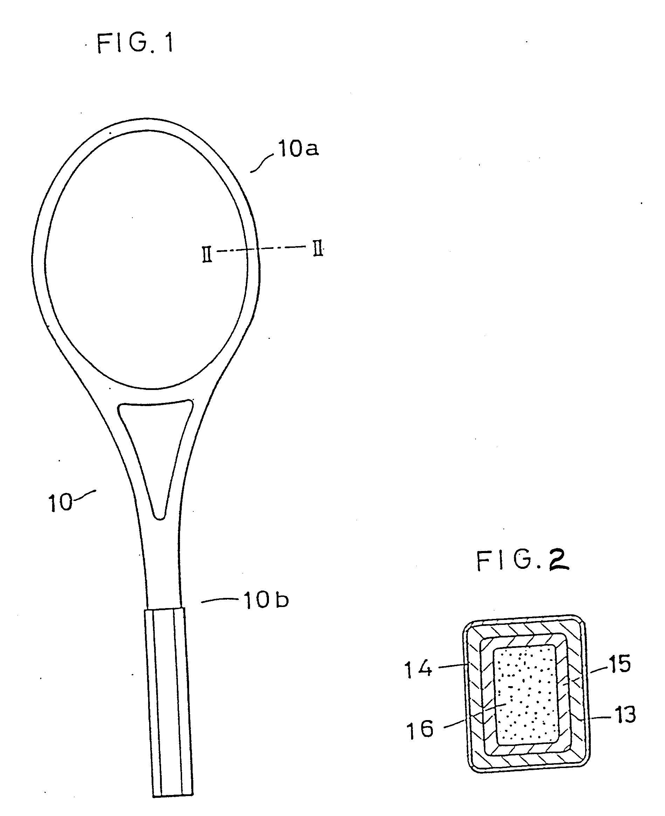

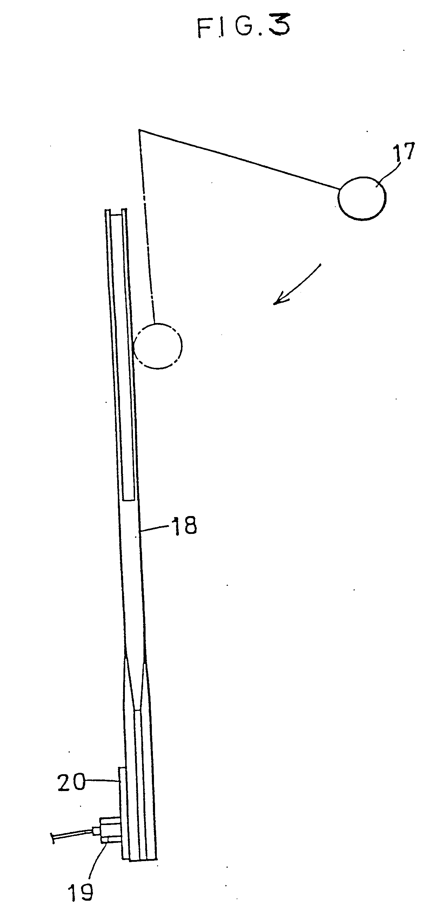

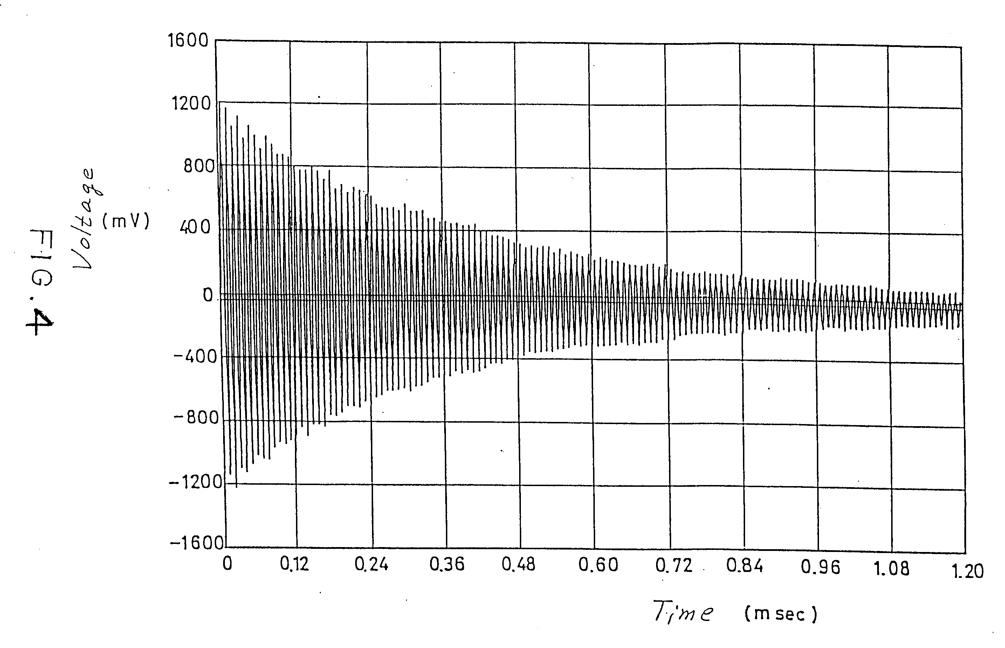

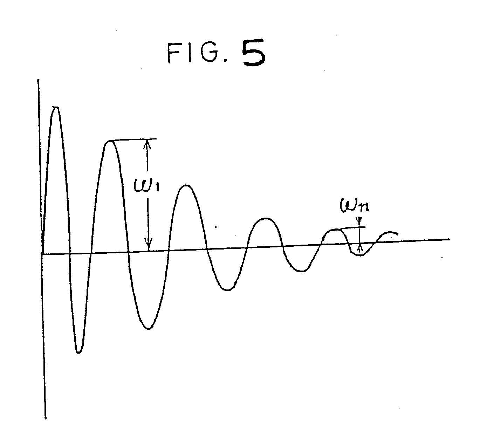

FIG.1 is a front view of a tennis racket frame; FIG.2 is a sectional view of part of this frame; FIG.3 is an explanatory diagram of a testing method for attenuation characteristics; FIG.4 is a graph to express the attenuation waveform of the racket; and FIG.5 is an explanatory diagram for calculating damping ratio.

The invention is illustrated by Examples 1 to 3 thereof, to be read in conjunction with the Reference Example.

Reference Example

Braided carbon fibers were wound around a nylon tube which was a synthetic resin tube, at 45 wt.%, and a cloth of aromatic polyamide resin (tradename KEVLAR49) at 10 wt.%, and they were put in a mold for a mid-size tennis racket frame. This mold was heated to 150°C, and evacuated to 1 mmHg by using a vacuum pump. Precisely 300g of $\epsilon$-caprolactam was heated and melted at 130°C in a 1-liter flask while replacing with nitrogen, and 0.64g of NaH (50% oil based) was added to react and dissolve completely. At the same time, in another 1-liter flask, 300g of $\epsilon$-caprolactam was put, and was heated and melted at 130°C white similarly replacing with nitrogen, and 0.4g of N-acetyl-$\epsilon$-caprolactam was added to dissolve completely. These lactam mixture solutions were simultaneously put into said mold, and a lid was immediately put on, and the mold was kept at 150°C for 30 minutes. Its core part was filled with urethane foam, and a grip was attached to a shaft part 10b to manufacture a product as shown in FIG. 1. This tennis racket frame 10 had head part 10a and grip part 10b, and the product weight was 325g. This frame 10 was strung with gut and was used in actual play, and there was no problem in its durability.

The vibration attenuation characteristic of this racket strung with gut is shown in FIG. 4, the racket possessing a section as shown in FIG. 2 in which the filled core 16 is foamed urethane as mentioned above, numeral 15 is a nylon tube, 14 is a surface resin layer (nylon) and 13 is a substrate made of a sleeve of continuous filament of 45 wt.% carbon fibers and 10 wt.% aromatic polyamide resin fibers (tradename KEVLAR49).

The vibration attenuation waveform was obtained as follows. As shown in FIG. 3, a tennis ball 17 was suspended on a string, and it was dropped by gravity to hit against the center of hitting area of a racket 8 strung with gut which was also suspended on a string with the frame hitting part (head part 10a) upward; the attenuation of the vibration at this time was received by an accelerometer 19 which was mounted on the grip by way of an aluminum plate 20, and it was observed on a cathode-ray tube as vibration attenuation waveform.

From the attenuation waveforms in FIG. 4 thus obtained, the damping ratio $\zeta$ was determined in the following equation according to FIG.5.

$$\zeta = \frac{1}{\pi (n - 1)} \cdot \ell n \frac{\omega 1}{\omega 2}$$

When the damping ratio was calculated, it was 0.0582 in FIG.4 As clear from this fact, the product was extremely excellent in its vibration attenuation characteristic.

Example 1

Component A of UBE Nylon RIM (UX-21) (caprolactam containing alkali catalyst) and component B (caprolactam containing prepolymer) were heated and melted at 90 to 100°C while replacing with nitrogen and components A and B were quickly mixed, poured into carbon fibers (reinforcing material) surface treated with 0.5% methanol solution of Toray AQ Nylon (A-70) and kept at 150°C for 10 minutes.

Using this material, a similar racket frame to the one in the Reference Example was prepared. The obtained racket frame presented equal or better performances as compared with the product of the Reference Example.

## Example 2

The procedure was as in Example 1 except that a cloth was used so as to contain carbon fibers at 30 wt.% as reinforcing fibers. The head wall thickness of the frame was 1.5 mm (average). The intrinsic visocity ($\eta$) of the resin of this racket frame was 3.07 (solvent m-cresol; according to ISO 307).

## Example 3

The procedure was as in Example 2, except that the content of carbon fibers was 70 wt.%, and that the hitting area of the frame was 170% larger than that of mid-size, and that the head wall thickness of the frame was 1 mm at maximum.

## Claims

1. A reactive injection moulded polyamide resin structure reinforced by continuous fiber and/or long filament reinforcing material characterised in that said reinforcing material is surface treated with nylon soluble in alcohol or water or both water and alcohol.

2. A structure according to claim 1 which is a bar.

3. A structure according to claim 1 which is a tennis racket frame.

4. A method of fabricating a continuous fiber- and/or long filament-reinforced polyamide resin structure by the monomer casting method comprising providing said reinforcing material in a mold, pouring molten $\omega$-lactam containing polymerization catalyst and initiator into said mold, and heating to obtain polyamide resin and form the structure, characterised in that said reinforcing material is preliminarily surface treated with nylon which is soluble in alcohol or water or both alcohol and water.

5. A method according to claim 4 wherein the structure formed is a bar.

6. A method according to claim 4 wherein the structure formed is a tennis racket frame.

## Patentansprüche

1. Reaktionsspritzgegossene Polyamidharzstruktur, verstärkt durch Verstärkungsmaterial aus Endlosfäden und/oder langen Fäden, dadurch gekennzeichnet, daß dieses Verstärkungsmaterial mit in Alkohol oder Wasser oder sowohl in Wasser als auch in Alkohol löslichem Nylon oberflächenbehandelt ist.

2. Struktur nach Anspruch 1, welche eine Stange ist.

3. Struktur nach Anspruch 1, welche ein Tennisschlägerrahmen ist.

4. Verfahren zur Herstellung einer Polyamidharzstruktur, verstärkt durch Verstärkungsmaterial aus Endlosfäden und/oder langen Fäden, nach der Monomerenspritzmethode, umfassend die Bereitstellung des Verstärkungsmaterials in einer Form, Spritzen von geschmolzenem, Polymerisationskatalysator und Initiator enthaltendem $\omega$-Lactam in diese Form und Erhitzen zur Erzeugung von Polyamidharz und Formen der Struktur, dadurch gekennzeichnet, daß dieses Verstärkungsmaterial vorweg mit Nylon, das in Alkohol oder Wasser oder sowohl in Alkohol als auch in Wasser löslich ist, vorbehandelt wird.

5. Verfahren nach Anspruch 4, wobei die geformte Struktur eine Stange ist.

6. Verfahren nach Anspruch 4, wobei die geformte Struktur ein Tennisschlägerrahmen ist.

## Revendications

1. Une structure de résine polyamide moulée par le procédé de réaction et moulage par injection renforcée par des fibres continues et/ou des filaments longs de matériau de renfort, caractérisée par le fait que la surface dudit matériau de renfort a été traitée avec du nylon soluble dans l'alcool ou dans l'eau ou à la fois dans l'alcool et dans l'eau.

2. Une structure selon la revendication 1 qui a la forme d'une barre.

3. Une structure selon la revendication 1 qui est un cadre de raquette de tennis.

4. Un procédé de fabrication d'une structure en résine polyamide renforcée par des fibres continues et/ou des filaments longs, par la technique de coulée de monomère, procédé qui comprend la disposition dudit matériau de renfort dans un moule, la coulée d'$\omega$-lactame fondu contenant un catalyseur de polymérisation et un agent d'amorçage dans ledit moule, et le chauffage pour obtenir une résine polyamide et former la structure, caractérisée par le fait que la surface du matériau de renfort a été pré-traitée avec du nylon qui est soluble dans l'alcool ou dans l'eau ou à la fois dans l'alcool et dans l'eau.

5. Un procédé selon la revendication 4, dans lequel la structure a la forme d'une barre.

6. Un procédé selon la revendication 4, dans lequel la structure a la forme d'un cadre de raquette de tennis.

FIG. 1

10a

II —·—·— II

10

10 b

FIG. 2

14

16

15

13

# FIG.3

FIG. 4

FIG. 5